# EUROPEAN PATENT APPLICATION

(11) **EP 4 227 601 A1**
(43) Date of publication of application: **16.08.2023**
(21) Application number: 21877689.6
(22) Date of filing: 07.10.2021
(51) Int. Cl.: F25B 1/00, C09K 5/04

(54) **COMPOSITION, HEAT CYCLE SYSTEM, AND METHOD FOR SUPPRESSING DISPROPORTIONATION REACTION IN REFRIGERANT**

(30) Priority: 08.10.2020 JP 2020170587
(71) Applicant: DAIKIN INDUSTRIES, LTD., Osaka-shi, Osaka 530-0001 (JP)
(72) Inventor: USUI, Takashi, Osaka-shi Osaka 530-0001 (JP); GOTOU, Tomoyuki, Osaka-shi Osaka 530-0001 (JP); YOTSUMOTO, Yuuki, Osaka-shi Osaka 530-0001 (JP); YOSHIMURA, Takashi, Osaka-shi Osaka 530-0001 (JP); ITO, Yuuko, Osaka-shi Osaka 530-0001 (JP); WATANABE, Yuka, Osaka-shi Osaka 530-0001 (JP)
(74) Representative: Hoffmann Eitle
(86) International application number: PCT/JP2021/037081
(87) International publication number: WO 2022/075390

(57) **Abstract**

An object of the present disclosure is to provide a composition in which disproportionation of a refrigerant is suppressed, a heat cycle system using the composition, and a method for suppressing a disproportionation reaction of a refrigerant.

A composition comprising a refrigerant and a refrigeration oil, the refrigerant comprising at least one refrigerant selected from the group consisting of HFO-1141, HFO-1132(E/Z), HFO-1132a, HFO-1123, and FO-1114, the refrigeration oil having a contact angle with a substrate of 0.1°≤Θ≤90°, the substrate comprising at least one member selected from the group consisting of engineering plastics, organic films, inorganic films, glass, and metals.

## Description

### Technical Field

The present disclosure relates to a composition, a heat cycle system, and a method for suppressing a disproportionation reaction of a refrigerant.

### Background Art

Patent Literature 1 discloses a composition for a heat cycle system, comprising a working medium for a heat cycle and a refrigeration oil, the working medium for a heat cycle containing an unsaturated fluorinated hydrocarbon compound, such as trifluoroethylene, 2,3,3,3-tetrafluoropropene, 1,2-difluoroethylene, 2-fluoropropene, 1,1,2-trifluoropropene, (E/Z)-1,2,3,3,3-pentafluoropropene, (E/Z)-1,3,3,3-tetrafluoropropene, or 3,3,3-trifluoropropene, the refrigeration oil having a breakdown voltage of 25 kV or more, a hydroxy value of 0.1 mgKOH/g or less, and an aniline point of -100°C or more and 0°C or less.

### Citation List

### Patent Literature

PTL 1: WO2015/125884A1

### Summary of Invention

### Technical Problem

An object of the present disclosure is to provide a composition in which disproportionation of a refrigerant is suppressed, a heat cycle system using the composition, and a method for suppressing a disproportionation reaction of a refrigerant.

### Solution to Problem

The present disclosure includes the embodiments described in the following items.
Item 1.
   A composition comprising a refrigerant and a refrigeration oil, the refrigerant comprising at least one refrigerant selected from the group consisting of monofluoroethylene (HFO-1141), trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), the refrigeration oil having a contact angle with a substrate of 0.1°≤Θ≤90°, the substrate comprising at least one member selected from the group consisting of engineering plastics, organic films, inorganic films, glass, and metals.
Item 2.
   The composition according to Item 1, wherein the refrigeration oil has a breakdown voltage of 10 kV or more.
Item 3.
   The composition according to Item 1 or 2, wherein the refrigeration oil is at least one member selected from the group consisting of polyalkylene glycols (PAGs), polyol esters (POEs), and polyvinyl ethers (PVEs).
Item 4.
   The composition according to any one of Items 1 to 3, which is for use as a refrigeration oil-containing working fluid.
Item 5.
   The composition according to any one of Items 1 to 4, which is for use in a heat cycle system.
Item 6.
   A heat cycle system using the composition according to any one of Items 1 to 5.
Item 7.
   The heat cycle system according to Item 6, wherein the heat cycle system is at least one member selected from the group consisting of freezing and refrigerating equipment, air-conditioning systems, power generation systems, heat transport equipment, and secondary cooling machines.
Item 8.
   The heat cycle system according to Item 6 or 7, wherein the heat cycle system comprises a compression mechanism, the compression mechanism comprises a contact portion that comes into contact with the composition for the heat cycle system in the compression mechanism, and the contact portion comprises at least one member selected from the group consisting of engineering plastics, organic films, inorganic films, glass, and metals.
Item 9.
   The heat cycle system according to Item 8, wherein the contact portion comprises at least one engineering plastic selected from the group consisting of polyamide resins, polyphenylene sulfide resins, polyacetal resins, polybutylene terephthalate resins, and fluororesins.
Item 10.
   A method for suppressing a disproportionation reaction of a refrigerant using a refrigeration oil, the refrigerant comprising at least one refrigerant selected from the group consisting of monofluoroethylene (HFO-1141), trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), the refrigeration oil having a contact angle with a substrate of 0.1°≤Θ≤90°, the substrate comprising at least one member selected from the group consisting of engineering plastics, organic films, inorganic films, glass, and metals.
Item 11.
   The method according to Item 10, wherein the refrigeration oil has a breakdown voltage of 10 kV or more.
Item 12.
   The method according to Item 10 or 11, wherein the refrigeration oil is at least one member selected from the group consisting of polyalkylene glycols (PAGs), polyol esters (POEs), and polyvinyl ethers (PVEs).

### Advantageous Effects of Invention

The present disclosure provides a composition in which disproportionation of a refrigerant is suppressed.

The present disclosure provides a heat cycle system using a composition in which disproportionation of a refrigerant is suppressed.

The present disclosure provides a method for suppressing a disproportionation reaction of a refrigerant contained in a composition.

### Description of Embodiments

The present inventors conducted extensive research to improve, in a composition comprising a refrigerant, the stability of the refrigerant (working medium for a heat cycle) and found that this object can be achieved when a refrigeration oil having a contact angle with a substrate of 0.1°≤Θ≤90° (indicating wettability) coexists with the refrigerant.

The inventors found that the refrigeration oil further improves the stability of the refrigerant, in particular, when it has a breakdown voltage of 10 kV or more.

Embodiments encompassed by the present disclosure are described in detail below.

### Definition of Terms

In the present specification, the term "refrigerant" includes at least compounds that are specified in ISO817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given.

Refrigerants are broadly divided into fluorocarbon compounds and non-fluorocarbon compounds in terms of the structure of the compounds. Fluorocarbon compounds include hydrochlorofluorocarbons (HCFCs) and hydrofluorocarbons (HFCs). Non-fluorocarbon compounds include propane (R290), propylene (R1270), butane (R600), isobutane (R600a), and the like.

In the present specification, the term "composition comprising a refrigerant" at least includes (1) a refrigerant itself (including a mixture of refrigerants, i.e., refrigerant mixture), (2) a composition that further comprises one or more other components and that can be mixed with at least a refrigeration oil to obtain a working fluid for a refrigerating machine, and (3) a working fluid for a refrigerating machine (refrigeration working fluid) containing a refrigeration oil.

In the present specification, of these three embodiments, the composition (2) is referred to as a "refrigerant composition" so as to distinguish it from a refrigerant itself (including a mixture of refrigerants).

In the present specification, the working fluid for a refrigerating machine (3) is referred to as a "refrigeration oil-containing working fluid" (working fluid containing refrigeration oil) so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment.

In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use achieved with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the terms "comprise" and "contain" include the concepts of "comprise," "contain," "consist essentially of," and "consist of."

In the present specification, when numerical ranges are stated in steps, the upper-limit value or the lower-limit value of one numerical range can be randomly combined with the upper-limit value or the lower-limit value of another numerical range.

The upper-limit values or the lower-limit values of the numerical ranges stated in the present specification may be replaced with a value shown in the Examples or a value that can be unambiguously derived from the Examples.

In the present specification, the following terms are as described below.
Monofluoroethylene: HFO-1141
Trans-1,2-difluoroethylene: HFO-1132(E) ((E)-1,2-difluoroethylene)
Cis-1,2-difluoroethylene: HFO-1132(Z) ((Z)-1,2-difluoroethylene)
(E)- and/or (Z)-1,2-difluoroethylene: HFO-1132(E/Z) ("(E/Z)" means including E form (trans form) and/or Z form (cis form).)
1,1-Difluoroethylene: HFO-1132a
Trifluoroethylene: HFO-1123
Tetrafluoroethylene: FO-1114

### [1] Composition

### (1) Refrigerant

The composition of the present disclosure comprises a refrigerant (working medium for a heat cycle), and the refrigerant comprises at least one refrigerant selected from the group consisting of monofluoroethylene (HFO-1141), trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114).

In the composition of the present disclosure, the refrigerant preferably functions as a working medium for a heat cycle, and the composition is useful in a heat cycle system.

The method for producing the refrigerant to be contained in the composition of the present disclosure is not limited. For example, various refrigerants can be produced by known production methods. When the refrigerant is HFO-1132(E/Z), HFO-1132(E/Z) can be produced by a reaction of dehydrofluorination of 1,1,2-trifluoroethane (HFC-143), hydrogenation of (E)- and/or (Z)-1,2-dichloro-1,2-difluoroethylene (CFO-1112(E/Z)), or dehydrochlorination of 1-chloro-1,2-difluoroethane (HCFC-142a).

The total amount of refrigerant in the composition of the present disclosure can be identified by gas chromatography.

The refrigerant contained in the composition may preferably consist essentially of at least one refrigerant selected from the group consisting of HFO-1141, HFO-1132(E/Z), HFO-1132a, HFO-1123, and FO-1114.

The refrigerant contained in the composition may contain compounds other than at least one refrigerant selected from the group consisting of HFO-1141, HFO-1132(E/Z), HFO-1132a, HFO-1123, and FO-1114.

In the composition of the present disclosure, the refrigerant content is not limited and is generally preferably 95 mass% or less, more preferably 90 mass% or less, even more preferably 80 mass% or less, particularly preferably 70 mass% or less, and most preferably 60 mass% or less, based on the entire composition. The refrigerant content is preferably 5 mass% or more, more preferably 10 mass% or more, even more preferably 20 mass% or more, particularly preferably 30 mass% or more, and most preferably 40 mass% or more, based on the entire composition.

The composition may contain, as other refrigerants, impurities (unavoidable impurities) that can become mixed in during the production of the above refrigerant.

When the refrigerant is HFO-1132(E/Z), examples of such impurities include hydrogen fluoride, fluoroethylene, HFO-1123, 1,1,1-trifluoroethane, propylene, acetylene, difluoromethane (HFC-32), trifluoromethane, fluoromethane, HFO-1123, 1,1-difluoroethane (HFC-152a), fluoroethane (HFC-161), 1,1,2-trifluoroethane (HFC-143), 2-chloro-1,1,1-trifluoroethane (HCFC-133b), 1-chloro-1,1,2-trifluoroethane (HCFC-133), 1,1-dichloro-2,2,2-trifluoroethane (HCFC-123), 1-chloro-1,2-difluoroethane (HCFC-142a), 1,2-difluoroethane (HFC-152), chlorodifluoromethane (HCFC-22), 1,1,1,2-tetrafluoroethane (HFC-134a), 1,1,2,2-tetrafluoroethane (HFC-134), pentafluoroethane (HFC-125), 2,3,3,3-tetrafluoropropene (HFO-1234yf), 1,2,3,3,3-pentafluoropropene (HFO-1225ye), 1,3,3,3-tetrafluoropropene (HFO-1234ze), 1,3,3,3-tetrafluoropropene (HFO-1234ze), fluoroethylene (HFO-1141), 3,3,3-trifluoropropene (HFO-1243zf), 1,1-difluoroethylene (HFO-1132a), 1-chloro-2,2-difluoroethylene (HCFO-1122), 1-chloro-1,2-difluoroethylene (HCFO-1122a), ethylene, and the like.

The other refrigerants include 2-fluoropropene (HFO-1261yf), 1,1,2-trifluoropropene (HFO-1243yc), (E)-1,2,3,3,3-pentafluoropropene (HFO-1225ye(E)), (Z)-1,2,3,3,3-pentafluoropropene (HFO-1225ye(Z)), (E)-1,3,3,3-tetrafluoropropene (HFO-1234ze(E)), (Z)-1,3,3,3-tetrafluoropropene (HFO-1234ze(Z)), 3,3,3-trifluoropropene (HFO-1243zf), and the like.

The other refrigerants include difluoromethane (HFC-32), 1,1-difluoroethane (HFC-152a), 1,1,1-trifluoroethane (HFC-143a), 1,1,2,2-tetrafluoroethane (HFC-134), 1,1,1,2-tetrafluoroethane (HFC-134a), 1,1,1,2,2-pentafluoroethane (HFC-125), and the like.

The other refrigerants include hydrocarbons, such as propane, propylene, cyclopropane, butane, isobutane, pentane, and isopentane.

The other refrigerants include chlorofluoroolefins, such as 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112).

The other refrigerants include hydrochlorofluoroolefins, such as 1-chloro-2,3,3,3-tetrafluoropropene (HCFO-1224yd) and 1-chloro-1,2-difluoroethylene (HCFO-1122a).

One of these other refrigerants may be contained singly, or two or more of these other refrigerants may be contained in combination.

When the refrigerant contained in the composition of the present disclosure contains the other refrigerants and impurities mentioned above, the content thereof is not limited. For example, the other refrigerants and impurities may be contained in an amount of about 0.1 ppm or more and 10,000 ppm or less on a weight basis. Within this range, the stabilizing effect on the refrigerant in the composition is less likely to be interfered with.

### (2) Refrigeration Oil

The composition of the present disclosure comprises the refrigerant described above and a refrigeration oil, and is preferably used as a working fluid in a refrigerating machine (working fluid for a refrigerating machine) or a refrigeration oil-containing working fluid.

Specifically, the composition of the present disclosure is obtained as a refrigeration oil-containing working fluid by mixing a refrigeration oil used in a compressor of a refrigerating machine with the refrigerant.

Since the composition of the present disclosure comprises a refrigeration oil, the formulation of the composition varies in a refrigeration cycle. Specifically, the refrigeration oil content of the composition of the present disclosure is relatively higher in a compressor, and is relatively lower in the period until it is discharged from the compressor in the form of mist, circulates in the refrigeration cycle, and returns to the compressor. For example, the refrigeration oil content of the composition of the present disclosure is 30 to 70 mass% in the compressor, and is preferably 0 to 20 mass%, and more preferably 1 ppm by mass to 10 mass%, in the period until it is discharged from the compressor and returns to the compressor.

The refrigeration oil has a contact angle with a substrate of 0.1°≤Θ≤90°.

When a refrigerant such as HFO-1141, HFO-1132(E/Z), HFO-1132a, HFO-1123, or FO-1114 is used as a refrigerant in the composition of the present disclosure, such a refrigerant may undergo a disproportionation reaction under certain pressure and temperature conditions when an ignition source is present.

The stability of the refrigerant may be maintained by controlling an ignition source in a compressor, adjusting the formulation of the refrigerant contained in the composition so that disproportionation does not occur, or controlling the temperature and pressure in a compressor. That is, the disproportionation of the refrigerant may be suppressed. However, in a heat cycle system in which the pressure and temperature in an operating compressor may become a pressure and temperature that may cause disproportionation of the refrigerant contained, a measure to prevent disproportionation of the refrigerant is necessary.

For example, possible ignition sources in a compressor include electric discharge phenomena at a terminal pin and between wound wires.

Electric discharge at a terminal pin is an electric discharge phenomenon that occurs when metal powder or carbide accumulates between the pin and a compressor material. Electric discharge between wound wires is an electric discharge phenomenon that occurs between copper wound wires coated with a resin when the resin is damaged or when the resin melts under overheating conditions.

The composition of the present disclosure contains, as the refrigeration oil, a refrigeration oil having a contact angle with a substrate (e.g., glass (terminal material) or copper (winding)) of 0.1°≤Θ≤90°.

Since the maximum voltage generated inside a compressor is about 2 kV, the composition of the present disclosure can also prevent electric discharge by containing a specific refrigeration oil, in particular, a refrigeration oil having a breakdown voltage higher than about 2 kV.

The refrigeration oil can also improve the lubrication properties of the refrigerant.

### (3) Contact Angle of Refrigeration Oil with Substrate

The refrigeration oil contained in the composition of the present disclosure has a contact angle with a substrate of 0.1°≤Θ≤90°, the substrate comprising at least one member selected from the group consisting of engineering plastics, organic films, inorganic films, glass, and metals.

In the present disclosure, the degree of wetting of the refrigeration oil quantified is referred to as the "contact angle" (Θ), which is defined as the angle between the liquid surface and the solid surface at a place in which the free surface of a stationary liquid comes into contact with a solid wall (the angle inside the liquid).

The contact angle (wettability) of the refrigeration oil is determined by measuring the contact angle formed by the refrigeration oil dropped on the surface of the substrate. The angle Θ between the tangent line of the refrigeration oil (droplet) dropped on the surface of the substrate and the substrate (solid surface) is defined as the "contact angle."

In the present disclosure, the measurement of the contact angle of the refrigeration oil with the substrate (evaluation of wettability to the substrate) is performed by a sessile drop method in accordance with JIS R3257, as described later in the Examples.

The substrate is a contact portion that is present in a compressor and comes into contact with the composition for a heat cycle system of the present disclosure, and the substrate is formed of, for example, an engineering plastic, an organic film, an inorganic film, glass (terminal material), or a metal, such as copper (winding).

If the contact angle is less than 0.1°, the film thickness of the refrigeration oil on the surface of the substrate decreases, which causes a reduction in the breakdown voltage, and electric discharge at an ignition source. If the contact angle is greater than 90°, the surface of the substrate may have areas that are not covered with the refrigeration oil, which causes electric discharge at an ignition source.

The refrigeration oil has a contact angle (Θ) with the substrate of 0.1°≤Θ≤90°. The contact angle (Θ) of the refrigeration oil with the substrate is 0.1° or more, preferably 1° or more, and more preferably 10° or more. The contact angle (Θ) of the refrigeration oil with the substrate is 90° or less, preferably 80° or less, and more preferably 70° or less.

In the composition of the present disclosure, since the refrigeration oil has a contact angle with the substrate of 0.1° or more and 90° or less, the refrigeration oil exhibits good wettability, and the ignition source is well covered with the refrigeration oil. Thus, in a heat cycle system, electric discharge can be prevented, and disproportionation of the refrigerant can be suppressed.

### (4) Breakdown Voltage of Refrigeration Oil

The refrigeration oil contained in the composition of the present disclosure preferably has a breakdown voltage of 15 kV or more.

In the present disclosure, the breakdown voltage of the refrigeration oil is measured in accordance with JIS C2101, as described later in the Examples. The breakdown voltage of the refrigeration oil is a catalog value, or the breakdown voltage of the refrigeration oil can be confirmed to be 10 kV or more by simple confirmation based on JIS C2101.

The maximum voltage generated inside a compressor is about 2 kV; thus, the composition of the present disclosure can prevent electric discharge, in particular, when a refrigeration oil having a breakdown voltage higher than about 2 kV is used.

When a refrigeration oil with a breakdown voltage of 10 kV or more is used as the refrigeration oil in the composition of the present disclosure, insulation can be maintained and stable operation can be achieved even in a heat cycle system in which an electromagnet for drive and a refrigeration oil are in direct contact with each other.

The refrigeration oil has a breakdown voltage of preferably 10 kV or more, more preferably 15 kV or more, even more preferably 20 kV or more, and particularly preferably 30 kV or more.

### (5) Type of Refrigeration Oil

The composition of the present disclosure comprises a refrigeration oil and is used as a working fluid in a refrigeration apparatus. Specifically, the composition of the present disclosure can be obtained by mixing the refrigerant (working medium for a heat cycle) with a refrigeration oil used in a compressor of a refrigeration apparatus.

The refrigeration oil is not limited, and can be suitably selected from typically used refrigeration oils. In this case, refrigeration oils that are superior in increasing action on the miscibility with the mixture of the working media for a heat cycle (refrigerants) of the present disclosure and stability of the mixed refrigerant of the present disclosure, for example, can be suitably selected as necessary.

The refrigeration oil preferably has a kinematic viscosity of 5 cSt or more and 400 cSt or less at 40°C from the standpoint of lubrication.

The refrigeration oil preferably comprises at least one polymer selected from the group consisting of polyalkylene glycols (PAGs), polyol esters (POEs), and polyvinyl ethers (PVEs). The composition of the present disclosure may comprise a single refrigeration oil or two or more refrigeration oils.

Examples of polyalkylene glycols (PAGs) include SUNICE P56, produced by Japan Sun Oil Company, Ltd., and the like. Examples of polyol esters (POEs) include Ze-GLES RB32, produced by JX Nippon Oil & Energy Corporation, and the like.

In the composition of the present disclosure, the content of the refrigeration oil is not limited, and is generally preferably 5 mass% or more, more preferably 10 mass% or more, even more preferably 20 mass% or more, particularly preferably 30 mass% or more, and most preferably 40 mass% or more, based on the entire composition. The content of the refrigeration oil is preferably 95 mass% or less, more preferably 90 mass% or less, even more preferably 80 mass% or less, particularly preferably 70 mass% or less, and most preferably 60 mass% or less, based on the entire composition.

### (6) Additives for Refrigeration Oil

The composition of the present disclosure may further contain additives in addition to the base oil of the refrigeration oil. The additive is preferably a compatibilizing agent. The additive may be at least one member selected from the group consisting of compatibilizing agents, antioxidants, extreme-pressure agents, acid scavengers, oxygen scavengers, copper deactivators, rust inhibitors, oil agents, and antifoaming agents.

The composition of the present disclosure may comprise a single compatibilizing agent or two or more compatibilizing agents.

The compatibilizing agent is not limited and can be suitably selected from commonly used compatibilizing agents. Examples of compatibilizing agents include polyoxyalkylene glycol ethers, amides, nitriles, ketones, chlorocarbons, esters, lactones, aryl ethers, fluoroethers, 1,1,1-trifluoroalkanes, and the like. Of these, polyoxyalkylene glycol ethers are preferred.

The composition of the present disclosure suppresses electric discharge, inhibits disproportionation of the refrigerant, and has excellent refrigerant stability since the refrigeration oil coexists with the refrigerant.

### (7) Method for Preparing Composition

The method for preparing the composition of the present disclosure is not limited.

For example, the composition of the present disclosure can be prepared by mixing the refrigerant, the refrigeration oil, and, if necessary, additives for the refrigeration oil, etc. in a predetermined ratio.

### [2] Heat Cycle System

### (1) Heat Cycle System

The refrigerant contained in the composition of the present disclosure preferably functions as a working medium for a heat cycle system, and the composition of the present disclosure is useful in a heat cycle system.

The heat cycle system of the present disclosure is a system using the composition of the present disclosure, and is preferably at least one member selected from the group consisting of freezing and refrigerating equipment, air-conditioning systems, power generation systems, heat transport equipment, and secondary cooling machines.

The heat cycle system of the present disclosure may be a heat pump system that uses heat obtained from a condenser or a refrigeration cycle system that uses cold obtained from an evaporator.

Specific examples of the heat cycle system of the present disclosure include freezing and refrigerating equipment, air-conditioning systems, power generation systems, heat transport equipment, secondary cooling machines, and the like. In particular, the heat cycle system of the present disclosure is preferably used as an air-conditioning system that is often installed, for example, outdoors because it can efficiently exhibit heat cycle performance even in higher-temperature operating environments. The heat cycle system of the present disclosure is also preferably used as freezing and refrigerating equipment.

Specific examples of freezing and refrigerating equipment include showcases (e.g., built-in showcases and separate showcases), commercial freezers and refrigerators, vending machines, ice makers, and the like.

Specific examples of air-conditioning systems include room air conditioners, packaged air conditioners (e.g., packaged air conditioners for shops, packaged air conditioners for buildings, and packaged air conditioners for facilities), gas engine heat pumps, air conditioners for trains, air conditioners for vehicles, and the like.

The power generation system is preferably a power generation system based on a Rankine cycle system. Specifically, the power generation system may, for example, be a system in which in an evaporator, a working medium is heated using geothermal energy, solar heat, waste heat in a medium-to-high temperature range of 50°C or more and 200°C or less, or the like, the vaporized working medium in a high-temperature, high-pressure state is adiabatically expanded by an expansion device, and a power generator is driven by the work generated by the adiabatic expansion to produce electric power.

The heat cycle system of the present invention may be a heat transport equipment.

The heat transport equipment is preferably a latent heat transport equipment. The latent heat transport equipment may, for example, be a heat pipe or two-phase closed thermosiphon apparatus, that use phenomena such as evaporation, boiling, and condensation of a working medium enclosed in an apparatus to transport latent heat. Heat pipes are applied to relatively small cooling apparatuses, such as cooling apparatuses for heat-generating parts of semiconductor devices and electronic devices. Two-phase closed thermosiphon apparatuses are widely used for gas-gas heat exchangers, snow-melting promotion and deicing of roads, etc. because of their simple structure without the need for a wick.

The heat cycle system of the present disclosure preferably comprises a compression mechanism, the compression mechanism comprises a contact portion that comes into contact with the composition for the heat cycle system in the compression mechanism, and the contact portion comprises at least one member selected from the group consisting of engineering plastics, organic films, inorganic films, glass, and metals.

### (2) Contact Portion That Comes into Contact with Composition

Heat cycle systems using heat exchangers such as a condenser and an evaporator are used without restriction as heat cycle systems to which the composition of the present disclosure is applied. A heat cycle system, such as a refrigeration cycle, has a mechanism in which a gaseous working medium is compressed in a compressor and cooled in a condenser to form a high-pressure liquid, the pressure is reduced by an expansion valve, and the liquid is evaporated at a low temperature in an evaporator so that heat is removed by evaporation heat.

The contact portion that comes into contact with the composition of the present disclosure is a portion present in a compressor. The contact portion preferably comprises at least one member selected from the group consisting of engineering plastics, organic films, inorganic films, glass (e.g., terminal materials), and metals (e.g., copper (windings) and cast iron (shaft portions and terminal materials)).

The contact portion includes, in particular, a portion to be protected, such as a sliding portion in a compression mechanism or a sealing portion inside a heat cycle system. Specific examples include a sliding member (e.g., a bearing) provided in a sliding portion of a compressor, a sealing member to prevent leakage of a working medium from a gap in a compressor, an insulating material provided in an electric motor, and the like.

The engineering plastic forming the contact portion is preferably at least one material selected from the group consisting of polyamide resins, polyphenylene sulfide resins, polyacetal resins, polybutylene terephthalate resins, and fluororesins.

The organic film is preferably at least one material selected from the group consisting of polytetrafluoroethylene coating films, polyimide coating films, polyamideimide coating films, and thermosetting insulating films formed using a resin coating material containing a polyhydroxy ether resin, a polysulfone resin, and a cross-linking agent.

The inorganic film is preferably at least one material selected from the group consisting of graphite films, diamondlike carbon films, tin films, chromium films, nickel films, and molybdenum films.

When the contact portion is a sliding member, polytetrafluoroethylene, polyphenylene sulfide, polyamide, etc. can be preferably used as the material of the contact portion. When a sliding member (e.g., a shaft) is made of metal, SUS, cast iron, etc. can be preferably used as the metal.

When the contact portion is a sealing portion, the material of the contact portion is preferably at least one material selected from the group consisting of polytetrafluoroethylene, polyphenylene sulfide, chloroprene rubber, silicone rubber, hydrogenated nitrile rubber, fluororubber, and epichlorohydrin rubber.

Examples of insulating materials of electric motors include insulating coating materials for stator windings, insulating films, and the like. These insulating coating materials and insulating films are made of resins that are not physically or chemically modified, even when brought into contact with a working medium at high temperatures and high pressure, by the working medium and that have, in particular, solvent resistance, extraction resistance, thermal and chemical stability, and foaming resistance.

Preferred examples of usable insulating coating materials of stator windings include polyvinyl formal, polyester, THEIC modified polyester, polyamide, polyamideimide, polyesterimide, polyesteramideimide, and the like.

The insulating coating material for stator windings is preferably a double-coated wire composed of polyamideimide as an upper layer and polyesterimide as a lower layer. In addition to the above substances, an enamel coating with a glass transition temperature of 120°C or more is preferably used.

Preferred examples of usable insulating films include polyethylene terephthalate (PET), polyethylene naphthalate (PEN), polyphenylene sulfide (PPS), polybutylene terephthalate (PBT), and the like. As an insulating film, a foamed film whose foamed material is the same as a working medium for a refrigeration cycle is preferably used.

As insulating materials for holding windings, such as insulators, polyetheretherketone (PEEK) and liquid crystal polymers (LCPs) are preferably used. An epoxy resin is preferably used as varnish.

The composition of the present disclosure, in which the disproportionation of the refrigerant is suppressed, can be used in heat cycle systems. The composition of the present disclosure makes it possible to suppress electric discharge and to provide a heat cycle system with excellent refrigerant stability.

Use of the composition of the present disclosure in the heat cycle system of the present disclosure provides sufficient cycle performance for practical use.

### [3] Method for Suppressing Disproportionation Reaction

The method for suppressing a disproportionation reaction of the present disclosure is a method for suppressing a disproportionation reaction of a refrigerant using a refrigeration oil, the refrigerant comprising at least one refrigerant selected from the group consisting of HFO-1141, HFO-1132(E/Z), HFO-1132a, HFO-1123, and FO-1114, the refrigeration oil having a contact angle with a substrate of 0.1°≤Θ≤90°, the substrate comprising at least one member selected from the group consisting of engineering plastics, organic films, inorganic films, glass, and metals.

Disproportionation is a chemical reaction in which two or more units (chemical compounds) of the same chemical species (an ethylene-based fluorinated hydrocarbon with a double bond, such as HFO-1132(E)) react with each other to give two or more different types of products.

Since the method for suppressing a disproportionation reaction of the present disclosure has the above features, the method of the present disclosure suppresses a disproportionation reaction of at least one refrigerant selected from the group consisting of HFO-1141, HFO-1132(E/Z), HFO-1132a, HFO-1123, and FO-1114.

In the method for suppressing a disproportionation reaction of the present disclosure, the disproportionation reaction of at least one refrigerant selected from the group consisting of HFO-1141, HFO-1132(E/Z), HFO-1132a, HFO-1123, and FO-1114 (or a composition containing these refrigerants) can be suppressed by adding, as a disproportionation inhibitor, a refrigeration oil having a contact angle with a substrate of 0.1°≤Θ≤90° to the refrigerant, the substrate comprising at least one member selected from the group consisting of engineering plastics, organic films, inorganic films, glass, and metals.

In the method for suppressing a disproportionation reaction of the present disclosure, the refrigeration oil preferably has a breakdown voltage of 10 kV or more. The refrigeration oil is preferably at least one member selected from the group consisting of polyalkylene glycols (PAGs), polyol esters (POEs), and polyvinyl ethers (PVEs).

The method for suppressing a disproportionation reaction of the present disclosure is preferably applied to compositions for use as refrigeration oil-containing working fluids or compositions for use in heat cycle systems.

The components used in the method for suppressing a disproportionation reaction, such as a refrigerant and a refrigeration oil, may be the components described in the sections on the composition and heat cycle system above.

### Examples

The present disclosure is described in more detail below with reference to Examples. However, the present disclosure is not limited to the embodiments of the Examples.

### (1) Preparation of Composition

### (1-1) Refrigerant (Working Medium for Heat Cycle)

Monofluoroethylene (HFO-1141)
Trans-1,2-difluoroethylene (HFO-1132(E))
Cis-1,2-difluoroethylene (HFO-1132(Z))
1,1-Difluoroethylene (HFO-1132a)
Trifluoroethylene (HFO-1123)
Tetrafluoroethylene (FO-1114)

### (1-2) Refrigeration Oil (Contact Angle with Substrate of 0.1°≤Θ≤90°)

### Evaluation of Wettability of Refrigeration Oil to Substrate (JIS R3257)

The wettability of a refrigeration oil to a substrate was evaluated in accordance with JIS R3257. The test was performed by a sessile drop method at a temperature of 25°C, and the droplet volume was 1 µL. To evaluate the contact angle, the angle formed when the apex of a droplet and the interface of the droplet were connected with a straight line was read by image analysis and then doubled to calculate the contact angle Θ, using an automatic contact angle meter. In the measurement, a droplet within 1 minute after a refrigeration oil was dropped and allowed to stand was evaluated.

The substrate was a polyamideimide resin used for coating copper windings.

### Evaluation of Breakdown Voltage of Refrigeration Oil (JIS C2101)

The breakdown voltage of a refrigeration oil was evaluated in accordance with JIS C2101. The breakdown voltage of a test oil at commercial frequency was measured by increasing the voltage at a rate of about 3 kV per second using opposing spherical electrodes having a diameter of 12.5 mm with a gap of 2.5 mm between the electrodes.

### Polyol Ester (POE)

Refrigeration oil A: a polyol ester-based refrigeration oil (trade name: UNISTER RH-208BRS, a product of NOF Corporation); contact angle with substrate: 25°; breakdown voltage: 20 kV or more
Refrigeration oil B: a polyol ester-based refrigeration oil (trade name: UNISTER RH-481R, a product of NOF Corporation); contact angle with substrate: 30°; breakdown voltage: 20 kV or more
Refrigeration oil C: a polyol ester-based refrigeration oil (trade name: UNISTER RHR-32, a product of NOF Corporation); contact angle with substrate: 34°; breakdown voltage: 20 kV or more
Refrigeration oil D: a polyol ester-based refrigeration oil (trade name: UNISTER RHR-64, a product of NOF Corporation); contact angle with substrate: 28°; breakdown voltage: 20 kV or more
Refrigeration oil E: a polyol ester-based refrigeration oil (trade name: UNISTER RHR-200, a product of NOF Corporation); contact angle with substrate: 38°; breakdown voltage: 20 kV or more
Refrigeration oil F: a polyol ester-based refrigeration oil (trade name: UNISTER RHR-609BR, a product of NOF Corporation); contact angle with substrate: 40°; breakdown voltage: 20 kV or more
Refrigeration oil G: a refrigeration oil containing a polyol ester as a main component (trade name: Ze-GLESRB-68, a product of JX Nippon Oil & Energy Corporation); contact angle with substrate: 25°; breakdown voltage: 20 kV or more

### Polyvinyl Ether (PVE)

Refrigeration oil H: a refrigeration oil containing a polyvinyl ether as a main component (trade name: Daphne Hermetic Oil FVC68D, a product of Idemitsu Kosan Co., Ltd.); contact angle with substrate: 31°; breakdown voltage: 20 kV or more

### Polyalkylene Glycol (PAG)

Refrigeration oil I: a polyalkylene glycol-based refrigeration oil (trade name: SUNICE P 56, a product of Japan Sun Oil Company, Ltd.); contact angle with substrate: 32°; breakdown voltage: 20 kV or more

### (1-3) Preparation Method

A composition was produced by mixing and dissolving 50 mass% of a refrigerant and 50 mass% of a refrigeration oil. An antioxidant (2,6-di-tert-butyl-4-methylphenol) was added as an additive to the refrigeration oil so that the amount of the antioxidant was 0.5 mass%, based on the total amount of the refrigeration oil and the antioxidant taken as 100 mass%.

### (2) Method of Electric Discharge Test

Each of the compositions obtained in the Examples and Comparative Examples was subjected to an electric discharge suppression test.

### (2-1) Presence or Absence of Electric Discharge

In the electric discharge test, the gap between electrodes was set to 0.1 mm, and the voltage was increased in increments of 0.3 kV to a maximum of 3 kV, in order to simulate electric discharge between wound wires, which are an ignition source in a compressor. This was repeated five times, and the following item was evaluated.

Other conditions were in accordance with JIS C2101, and evaluation was performed.
×: Electric discharge occurred in the refrigerant (the refrigeration oil)at least once in the electric discharge test.
ο: No electric discharge occurred at all in the electric discharge test.

### (2-2) Color Evaluation

After the electric discharge test, each composition for a heat cycle system was taken out, and the color of each refrigeration oil was evaluated in accordance with ASTM-D156.
o: There was no change in the color of the refrigeration oil.
×: Coloring progressed in the refrigeration oil.

### (2-3) Presence or Absence of Sludge

The presence or absence of sludge in each container after the electric discharge test was visually checked.
o: There was no sludge in the container after the electric discharge test.
×: There was sludge in the container after the electric discharge test.

### (3) Results of Electric Discharge Test

### (3-1) Presence or Absence of Electric Discharge

In Table 1, for "Refrigerant/refrigeration oil," "None" represents electric discharge results of Comparative Examples that contain a refrigerant and do not contain a refrigeration oil.

**Table 1**

| Table 1 (presence or absence of electric discharge) | | | | | | | | | | |
|---|---|---|---|---|---|---|---|---|---|---|
| Refrigerant/refrigeration oil | A | B | C | D | E | F | G | H | I | None |
| HFO-1141 | ○ | ○ | ○ | ○ | ○ | ○ | ○ | ○ | ○ | × |
| HFO-1132(E) | ○ | ○ | ○ | ○ | ○ | ○ | ○ | ○ | ○ | × |
| HFO-1132(Z) | ○ | ○ | ○ | ○ | ○ | ○ | ○ | ○ | ○ | × |
| HFO-1132a | ○ | ○ | ○ | ○ | ○ | ○ | ○ | ○ | ○ | × |
| HFO-1123 | ○ | ○ | ○ | ○ | ○ | ○ | ○ | ○ | ○ | × |
| FO-1114 | ○ | ○ | ○ | ○ | ○ | ○ | ○ | ○ | ○ | × |

### (3-2) Color Evaluation

**Table 2**

| Table 2 (color evaluation) | | | | | | | | | |
|---|---|---|---|---|---|---|---|---|---|
| Refrigerant/refrigeration oil | A | B | C | D | E | F | G | H | I |
| HFO-1141 | ○ | ○ | ○ | ○ | ○ | ○ | ○ | ○ | ○ |
| HFO-1132(E) | ○ | ○ | ○ | ○ | ○ | ○ | ○ | ○ | ○ |
| HFO-1132(Z) | ○ | ○ | ○ | ○ | ○ | ○ | ○ | ○ | ○ |
| HFO-1132a | ○ | ○ | ○ | ○ | ○ | ○ | ○ | ○ | ○ |
| HFO-1123 | ○ | ○ | ○ | ○ | ○ | ○ | ○ | ○ | ○ |
| FO-1114 | ○ | ○ | ○ | ○ | ○ | ○ | ○ | ○ | ○ |

### (3-3) Presence or Absence of Sludge

**Table 3**

| Table 3 (presence or absence of sludge) | | | | | | | | | |
|---|---|---|---|---|---|---|---|---|---|
| Refrigerant/refrigeration oil | A | B | C | D | E | F | G | H | I |
| HFO-1141 | ○ | ○ | ○ | ○ | ○ | ○ | ○ | ○ | ○ |
| HFO-1132(E) | ○ | ○ | ○ | ○ | ○ | ○ | ○ | ○ | ○ |
| HFO-1132(Z) | ○ | ○ | ○ | ○ | ○ | ○ | ○ | ○ | ○ |
| HFO-1132a | ○ | ○ | ○ | ○ | ○ | ○ | ○ | ○ | ○ |
| HFO-1123 | ○ | ○ | ○ | ○ | ○ | ○ | ○ | ○ | ○ |
| FO-1114 | ○ | ○ | ○ | ○ | ○ | ○ | ○ | ○ | ○ |

From the results of the electric discharge test, it can be evaluated that electric discharge can be suppressed when a refrigeration oil having a contact angle with a substrate of 0.1°≤Θ≤90° coexists with a refrigerant such as HFO-1132(E/Z), HFO-1132a, HFO-1123, or FO-1114 in a composition containing the refrigerant and the refrigeration oil. From the results, it can be evaluated that the combination of such a refrigerant with the specific refrigeration oil in a composition suppresses disproportionation of the refrigerant and provides excellent refrigerant stability.

In contrast, when no refrigeration oil was used (the Comparative Examples under "None" in Table 1), electric discharge occurred in the refrigerant (the refrigeration oil)in the electric discharge test.

Thus, the composition containing the refrigerant and the refrigeration oil of the present disclosure enables suppression of disproportionation of the refrigerant and has excellent refrigerant stability. Therefore, the composition of the present disclosure allows electric discharge to be suppressed in heat cycle systems.

## Claims

1. A composition comprising a refrigerant and a refrigeration oil, the refrigerant comprising at least one refrigerant selected from the group consisting of monofluoroethylene (HFO-1141), trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), the refrigeration oil having a contact angle with a substrate of 0.1°≤Θ≤90°, the substrate comprising at least one member selected from the group consisting of engineering plastics, organic films, inorganic films, glass, and metals.

2. The composition according to claim 1, wherein the refrigeration oil has a breakdown voltage of 10 kV or more.

3. The composition according to claim 1 or 2, wherein the refrigeration oil is at least one member selected from the group consisting of polyalkylene glycols (PAGs), polyol esters (POEs), and polyvinyl ethers (PVEs).

4. The composition according to any one of claims 1 to 3, which is for use as a refrigeration oil-containing working fluid.

5. The composition according to any one of claims 1 to 4, which is for use in a heat cycle system.

6. A heat cycle system using the composition according to any one of claims 1 to 5.

7. The heat cycle system according to claim 6, wherein the heat cycle system is at least one member selected from the group consisting of freezing and refrigerating equipment, air-conditioning systems, power generation systems, heat transport equipment, and secondary cooling machines.

8. The heat cycle system according to claim 6 or 7, wherein the heat cycle system comprises a compression mechanism, the compression mechanism comprises a contact portion that comes into contact with the composition for the heat cycle system in the compression mechanism, and the contact portion comprises at least one member selected from the group consisting of engineering plastics, organic films, inorganic films, glass, and metals.

9. The heat cycle system according to claim 8, wherein the contact portion comprises at least one engineering plastic selected from the group consisting of polyamide resins, polyphenylene sulfide resins, polyacetal resins, polybutylene terephthalate resins, and fluororesins.

10. A method for suppressing a disproportionation reaction of a refrigerant using a refrigeration oil, the refrigerant comprising at least one refrigerant selected from the group consisting of monofluoroethylene (HFO-1141), trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), the refrigeration oil having a contact angle with a substrate of 0.1°≤Θ≤90°, the substrate comprising at least one member selected from the group consisting of engineering plastics, organic films, inorganic films, glass, and metals.

11. The method according to claim 10, wherein the refrigeration oil has a breakdown voltage of 10 kV or more.

12. The method according to claim 10 or 11, wherein the refrigeration oil is at least one member selected from the group consisting of polyalkylene glycols (PAGs), polyol esters (POEs), and polyvinyl ethers (PVEs).
